# EUROPÄISCHE PATENTSCHRIFT

(11) **EP 3 269 652 B1**
(45) Veröffentlichungstag und Bekanntmachung des Hinweises auf die Patenterteilung: **09.12.2020**
(21) Anmeldenummer: 17173623.4
(22) Anmeldetag: 31.05.2017
(51) Int. Cl.: B64G 1/62, B64G 1/64, F03G 7/06, F16B 31/00

(54) **VERBINDUNGSANORDNUNG FÜR EINEN SATELLITEN MIT WÄRMEGESTEUERTEM SOLLBRUCHVERHALTEN**
CONNECTION ASSEMBLY FOR A SATELLITE WITH HEAT-CONTROLLED PREDETERMINED BREAKING BEHAVIOUR
SYSTÈME DE LIAISON POUR UN SATELLITE AYANT UN COMPORTEMENT DE RUPTURE À COMMANDE THERMIQUE

(30) Priorität: 11.07.2016 DE 102016212582
(43) Veröffentlichungstag der Anmeldung: 17.01.2018
(73) Patentinhaber: ArianeGroup GmbH, 82024 Taufkirchen (DE)
(72) Erfinder: Kraus, Stephan, 74229 Oedheim (DE); Maier, Thomas, 74348 Lauffen (DE)
(74) Vertreter: Schicker, Silvia

(56) Entgegenhaltungen:
- WO-A1-97/44243
- WO-A1-2016/088044

## Beschreibung

Die Erfindung betrifft eine Verbindungsanordnung für einen Satelliten mit wärmegesteuertem Sollbruchverhalten. Ferner betrifft die Erfindung einen Satelliten umfassend eine solche Verbindungsanordnung sowie ein Verfahren zur Strukturtrennung eines derartigen Satelliten.

Insbesondere für niedrigfliegende Satelliten ist in der Regel vorgesehen, das diese nach einer gewissen Betriebsdauer zurück zur Erde geführt werden, um keine Hindernisse in den Erdumlaufbahnen zu bilden. Die zurückgeführten Satelliten besitzen jedoch ein hohes Gefährdungspotenzial, da diese unter hohen Geschwindigkeiten auf die Erdoberfläche aufschlagen können. Es ist deshalb oftmals erforderlich, die Flugbahn des Satelliten derart vorzugeben, dass dieser allenfalls in nicht bewohnten Gebieten aufschlägt. Alternativ kann vorgesehen sein, den Satelliten derart auszulegen, dass dieser beim Atmosphärenwiedereintritt vollständig verglüht. In beiden Fällen ist jedoch entweder beim Überwachen und Steuern der Satellitenflugbahn oder bei dessen ursprünglicher Konstruktion ein hoher Aufwand erforderlich, um das geschilderte Gefährdungspotenzial zuverlässig zu reduzieren.

Das Dokument WO 97/44243 A1 offenbart ein System zum zeitweiligen Sperren einer relativen Bewegung zwischen zwei Körpern unter Verwenden einer aus einer Formgedächtnislegierung bestehenden Muffe, wobei mehrere Sollbruchstellen in axialer Richtung beabstandet zu der Muffe angeordnet sind.

Die Erfindung stellt sich daher die Aufgabe, einen Satelliten sowie ein Verfahren zum Betreiben eines Satelliten bereitzustellen, mit dem sich das Gefährdungspotenzial bei einem Zurückführen des Satelliten zur Erde aufwandsarm reduzieren lässt.

Diese Aufgabe wird durch eine Verbindungsanordnung für einen Satelliten gemäß Anspruch 1 sowie ein Verfahren gemäß Anspruch 10 gelöst.

Eine Verbindungsanordnung für einen Satelliten umfasst ein Kopplungselement mit einem ersten Kopplungsbereich für eine erste Satellitenkomponente und einem zweiten Kopplungsbereich für eine zweite Satellitenkomponente. Das Kopplungselement kann allgemein zylindrisch und/oder rotationssymmetrisch ausgebildet sein, insbesondere mit variierenden Querschnittsabmessungen, und vorzugsweise einstückig hergestellt sein sowie allgemein Metall, Kunststoff, Verbundwerkstoffen oder dergleichen umfassen.

Die Kopplungsbereiche können Anbindungsbereiche bereitstellen, um die Satellitenkomponenten daran zu befestigen, beispielsweise durch Schweiß-,
Schraub-, Niet- oder Klebverbindungen. Ebenso kann vorgesehen sein, dass zumindest einer der Kopplungsbereiche einstückig mit einer der Satellitenkomponenten ausgebildet ist. Als Beispiele für derartige Satellitenkomponenten seien Solargeneratoren sowie der Satellitenhauptkörper genannt, die mittels der Verbindungsanordnung verbunden werden können.

Entsprechend kann die Verbindungsanordnung, dazu ausgelegt sein, insbesondere mittels des Kopplungselementes Kräfte und/oder Momente zwischen den Satellitenkomponenten zu übertragen sowie diese Komponenten aneinander zu befestigen. Der erste und zweite Kopplungsbereich sind ferner über einen Verbindungsabschnitt des Kopplungselements miteinander verbunden und der Verbindungsabschnitt umfasst einen mechanisch geschwächten Bereich, der eine Sollbruchstelle bildet. Der Verbindungsabschnitt kann ebenfalls allgemein länglich und/oder zylindrisch ausgebildet sein (insbesondere mit variierenden Querschnittsabmessungen) und ist vorzugsweise einstückig mit zumindest einem der Kopplungsbereiche ausgebildet.

Allgemein kann vorgesehen sein, dass die Kopplungsbereiche derart über den Verbindungsabschnitt miteinander verbunden sind, dass ein Brechen an der Sollbruchstelle zu einer vollständigen Trennung der beiden Kopplungsbereiche führt. Hierzu kann vorgesehen sein, dass die Kopplungsbereiche im Wesentlichen ausschließlich über den Verbindungsabschnitt miteinander verbunden sind (zumindest im stoffschlüssigen Sinn).

Unter einer mechanischen Schwächung kann insbesondere eine reduzierte Kraftübertragungsfähigkeit verstanden werden, beziehungsweise eine gegenüber benachbarten Bereichen des Kopplungselements oder des Verbindungsabschnittes reduzierte Bruchgrenze. Dies kann allgemein durch ein Variieren der Materialeigenschaften im Bereich der Sollbruchstelle erfolgen, beispielsweise durch eine Wahl unterschiedlicher Materialien innerhalb des Kopplungselementes. Ebenso kann die Steifigkeit im Bereich der Sollbruchstelle reduziert werden, beispielsweise durch Variationen der Querschnittsabmessungen. Gemäß einer bevorzugten Variante wird die Sollbruchstelle durch eine Einschnürung in Form eines lokal reduzierten Querschnitts gebildet (Kerbe) und insbesondere eines lokal reduzierten Durchmessers bei zylindrischer (und/oder rotationssymmetrischer) Ausbildung des Verbindungsabschnitts.

Die Verbindungsanordnung umfasst ferner ein Aktorelement, das dazu ausgebildet ist, sich an dem Kopplungselement abstützen, wobei das Aktorelement und das Kopplungselement ein unterschiedliches Wärmeausdehnungsverhalten aufweisen, sodass das Aktorelement dazu ausgebildet ist, ab Erreichen eines vorbestimmten Erwärmungsgrades sich mit einer derartigen Kraft an dem Kopplungselement abzustützen, dass die Sollbruchstelle bricht.

Hierbei kann insbesondere vorgesehen sein, dass das Aktorelement sich bei einer Erwärmung in einem größeren Maße ausdehnt, als das Kopplungselement. Hierdurch kann das Ausmaß des Abstützens an dem Kopplungselement sowie der dadurch übertragenen Kräfte mit zunehmender Erwärmung entsprechend erhöht werden, insbesondere wenn das Kopplungselement eine Ausdehnung des Aktorelement behindert. Die auf das Kopplungselement daraufhin einwirkenden Kräfte können in dem Verbindungsabschnitt Spannungen erzeugen, die schließlich dazu führen, dass eine Bruchgrenze der Sollbruchstelle überschritten wird. Hierdurch können die Kopplungsbereiche sowie die etwaigen daran gekoppelten Satellitenkomponenten voneinander getrennt werden.

Das Abstützen des Aktorelements kann mittelbar, beispielsweise über zwischengeordnete Elemente erfolgen, oder aber unmittelbar, beispielsweise durch eine direkte Anlage an dem Kopplungselement. Man beachte, dass das Aktorelement insbesondere bei einem niedrigen Erwärmungsgrad sich zunächst auch nicht an dem Kopplungselement abstützen (und/oder direkt daran anliegen) muss. Vielmehr kann dies erst ab Erreichen eines gewissen Erwärmungsgrades erfolgen und zum Beispiel spätestens bei Erreichen des vorbestimmten Erwärmungsgrades.

Unter dem vorbestimmten Erwärmungsgrad kann insbesondere eine Temperaturerhöhung des Aktorelements auf einen vorbestimmten Temperaturschwellenwert verstanden werden. Ebenso kann dies ein Halten des Aktorelements auf oder oberhalb des entsprechenden Temperaturschwellenwerts für eine gewisse Mindestzeitdauer einschließen.

Die Erfinder haben somit erkannt, dass durch Bereitstellen einer solchen Verbindungsanordnung eine gezielte Strukturzertrennung eines Satelliten ermöglicht wird, insbesondere beim Atmosphärenwiedereintritt. Somit kann der Satellit rechtzeitig in einzelne Komponenten zertrennt werden, die aufgrund ihrer reduzierten Größe ein entsprechend geringeres Gefährdungspotenzial bei einem Auftreffen auf der Erdoberfläche besitzen. Ebenso kann eine derartige Strukturzertrennung erfolgen, dass die kleineren Einzelkomponenten anschließend mit einer höheren Wahrscheinlichkeit beim Atmosphärenwiedereintritt größtenteils oder vollständig verglühen.
Man beachte, dass diese Strukturtrennung im Wesentlichen durch die Gestaltung einer einzigen Baugruppe ermöglicht wird, was den Konstruktionsaufwand reduziert. Ferner kann die Verbindungsanordnung durch geeignete Wahl des Aktorelements auch nach einer langen Betriebsdauer des Satelliten eine zuverlässige Strukturtrennung ermöglichen. Beispielsweise kann vorgesehen sein, dass beim Atmosphärenwiedereintritt keinerlei gesonderte Energiezufuhr erfolgt, mit Ausnahme der aufgrund aerothermodynamischer Effekte erzeugten Reibungswärme durch den Kontakt des Satellitens mit der Erdatmosphäre. Diese Reibungswärme kann die Verbindungsanordnung und insbesondere das Aktorelement bis zu dem vorbestimmten Erwärmungsgrad erwärmen und somit die vorstehend erläuterte Trennung der darüber gekoppelten Satellitenkomponenten ermöglichen. Alternativ oder zusätzlich können aber auch nachfolgend geschilderte Heizeinheiten für das Aktorelement vorgesehen sein.

Eine Weiterbildung sieht vor, dass das Aktorelement dazu ausgebildet ist, nach Maßgabe eines Erwärmungsgrades Druckkräfte auf das Kopplungselement auszuüben. Wie vorstehend geschildert, kann hierzu vorgesehen sein, dass das Aktorelement sich bei einer Wärmezufuhr in einem stärkeren Maße ausdehnt, als das Kopplungselement. Ferner kann das Kopplungselement die Ausdehnung des Aktorelements behindern, sodass dieses entsprechend zunehmende Kräfte darin einleitet, beispielsweise in Form von Druckkräften. Diese können schließlich dazu führen, dass das Kopplungselement unter Spannung gesetzt und eine Bruchgrenze der Sollbruchstelle überschritten wird.

Ebenso kann vorgesehen sein, dass das Aktorelement spätestens ab Erreichen des vorbestimmten Erwärmungsgrades wenigstens eine Abmessung aufweist, die gegenüber einem Zustand des Aktorelements unterhalb des vorbestimmten Erwärmungsgrades vergrößert ist. Beispielsweise kann sich das Aktorelement in Abhängigkeit des Erwärmungsgrades verlängern und/oder seine Querschnittsabmessungen ändern.

Gemäß einer bevorzugten Variante umfasst das Aktorelement ein Formgedächtnismaterial. Derartige Materialien sind im Stand der Technik bekannt, zum Beispiel in Form von sogenannten Formgedächtnislegierungen (insbesondere Nickel-Titan-Legierungen). Das Formgedächtnismaterial kann ferner wärme- beziehungsweise temperaturaktivierbar sein. Mit anderen Worten kann das Formgedächtnismaterial nach Maßgabe eines Erwärmungsgrades des Aktorelements zu einer ursprünglichen Ausgangsform zurückkehren, die sich vorzugsweise in der vorstehend geschilderten Weise durch vergrößerte Abmessungen und/oder vergrößerte Abstützkräfte an dem Kopplungselement auszeichnet.

In diesem Zusammenhang kann das Formgedächtnismaterial (vor Einbau in die Vorrichtung) pseudoplastisch deformiert sein und spätestens ab Erreichen des vorbestimmten Erwärmungsgrades beginnen, zu seiner ursprünglichen Form zurückzukehren. Dabei kann die pseudoplastische Deformation ein Komprimieren das Aktorelements umfassen und findet vorzugsweise unter Ausüben von Druckkräften auf das Aktorelement statt.

Somit kann das Aktorelement zunächst in einem (pseudoplastisch) deformierten Zustand in der Verbindungsanordnung angeordnet werden, wobei das Aktorelement in diesem Zustand insbesondere reduzierte Abmessungen aufweisen kann (beispielsweise eine durch Kompression/Druckkräfte verringerte Länge). Hierbei kann das Werkstoffgefüge des Formgedächtnismaterial in bekannter Weise entzwillingt werden, um den Formgedächtniseffekt bereitzustellen. Die pseudoplastische Deformation kann bei ausbleibender oder nur geringer Erwärmung ferner zunächst bestehen bleiben. Nach Maßgabe eines Erwärmungsgrades des Aktorelements und insbesondere ab Erreichen einer Aktivierungstemperatur oder eines Aktivierungserwärmungsgrades kann anschließend die pseudoplastische Verformung rückgängig gemacht werden, sodass das Aktorelement zu seiner ursprünglichen Form zurücckehrt. Wie geschildert, kann dies insbesondere ein Zurückkehren in einen nicht-komprimierten Zustand umfassen, also beispielsweise eine entsprechende Vergrößerung und/oder Verlängerung des Aktorelements. Dies kann insgesamt in der vorstehend geschilderten größeren Wärmeausdehnung des Aktorelements verglichen mit dem Kopplungselement resultieren.

Gemäß der Erfindung stützt sich das Aktorelement beidseitig der Sollbruchstelle an dem Kopplungselement ab. Dabei kann es sich insbesondere an sowohl dem ersten wie auch dem zweiten Kopplungsbereich abstützen beziehungsweise an damit mittelbar oder unmittelbar verbundenen Abschnitten des Kopplungselementes. Ferner kann sich das beidseitige Abstützen auf ein entlang einer Längsachse des Kopplungselementes betrachtetes beidseitiges Abstützen beziehen. Beispielsweise kann die Sollbruchstelle entlang der Längsachse betrachtet zwischen den Abstützbereichen des Aktorelements an dem Kopplungselement angeordnet sein. Hierdurch kann gewährleistet werden, dass das Aktorelement eine ausreichende Dehnungskraft auf das Kopplungselement aufbringt, die beispielsweise zu einer zunehmenden Einschnürung der Sollbruchstelle führen kann, bis zu deren endgültigem Bruch.

Ebenso kann vorgesehen sein, dass das Kopplungselement wenigstens zwei Krafteinleitungsbereiche umfasst und das Aktorelement zwischen diesen Krafteinleitungsbereichen angeordnet ist. Die Krafteinleitungsbereiche können sich im Wesentlichen gegenüberliegen und/oder auf einem unterschiedlichen Niveau entlang einer Längsachse des Kopplungselementes angeordnet sein. Gemäß einer Variante sind die Krafteinleitungsbereiche jeweils nahe oder im Bereich eines der Kopplungsbereiche angeordnet sein. Ferner können diese allgemein flächig oder besonders profiliert ausgebildet sein, um eine zuverlässige Anlage und/oder ein Eingreifen des Aktorelements oder etwaiger zwischengeordneter Elemente darin zu ermöglichen.

Bei dieser Variante kann insbesondere vorgesehen sein, dass sich das Aktorelement spätestens ab Erreichen des vorbestimmten Erwärmungsgrades an den Krafteinleitungsbereichen abstützt und insbesondere unmittelbar damit in Anlage gelangt. In jedem Fall kann hierbei vorgesehen sein, dass das Aktorelement sich derart ausdehnt, dass es die Krafteinleitungsbereiche voneinander wegdrängt und darüber Spannungen in dem Verbindungsabschnitt erzeugt, die schlussendlich zu einem Brechen der Sollbruchstelle führen.

Gemäß der Erfindung umfasst das Aktorelement einen hohlzylindrischen Abschnitt, der den Verbindungsabschnitt zumindest abschnittsweise umgibt. Insbesondere kann das Aktorelement hülsen- oder rohrförmig ausgebildet sein oder einen entsprechend ausgebildetent Abschnitt umfassen. Das Aktorelement kann sich demnach entlang des Verbindungsabschnittes erstrecken und diesen dabei zumindest teilweise aufnehmen. Dabei kann sich das Aktorelement insbesondere zwischen den vorstehend geschilderten Krafteinleitungsbereichen erstrecken, die als gegenüber dem Verbindungsabschnitt vergrößerte Querschnittsbereiche des Kopplungselements ausgebildet sein können.

Schließlich kann die Verbindungsanordnung auch eine Heizeinheit umfassen, um das Aktorelement zu erwärmen und insbesondere wenigstens bis zu dem vorbestimmten Erwärmungsgrad zu erwärmen. Die Heizeinheit kann insbesondere elektrisch betreibbar sein und/oder in unmittelbarem Kontakt mit dem Aktorelement stehen, insbesondere in einem Kontakt mit einem etwaigen Formgedächtnismaterial des Aktorelements. Gemäß einer Variante ist das Heizelement zylindrisch ausgebildet und umgibt das ebenfalls zylindrische Aktorelement zumindest abschnittsweise.

Die Erfindung betrifft ferner einen Satelliten, der eine Verbindungsanordnung gemäß einem der vorangehenden Aspekte umfasst.

Ebenso betrifft die Erfindung ein Verfahren zur Strukturtrennung eines Satelliten, wobei der Satellit eine Verbindungsanordnung aufweist, die ein Kopplungselement mit einem ersten Kopplungsbereich für eine erste Satellitenkomponente und einem zweiten Kopplungsbereich für eine zweite Satellitenkomponente umfasst, wobei der erste und zweite Kopplungsbereich über einen Verbindungsabschnitt des Kopplungselements miteinander verbunden sind und der Verbindungsabschnitt einen mechanisch geschwächten Bereich umfasst, der eine Sollbruchstelle bildet, wobei die Verbindungsanordnung ferner ein Aktorelement umfasst, das dazu ausgebildet ist, sich an dem Kopplungselement abstützen, wobei das Aktorelement und das Kopplungselement ein unterschiedliches Wärmeausdehnungsverhalten aufweisen, sodass das Aktorelement dazu ausgebildet ist, ab Erreichen eines vorbestimmten Erwärmungsgrades sich mit einer derartigen Kraft an dem Kopplungselement abzustützen, dass die Sollbruchstelle bricht, umfassend den folgenden Schritt:
- Vorgeben einer Flugbahn des Satelliten, so dass dieser sich beim Atmosphärenwiedereintritt derart erwärmt, dass das Aktorelement bis zu dem vorbestimmten Erwärmungsgrad erwärmt wird.

Die Erwärmung des Satelliten und/oder des Aktorelements beim Atmosphäreneintritt kann ferner in Abhängigkeit einer vorgegebenen Flugbahn in bekannter Weise berechnet oder simuliert werden, um den vorbestimmten Erwärmungsgrad zuverlässig zu erreichen.

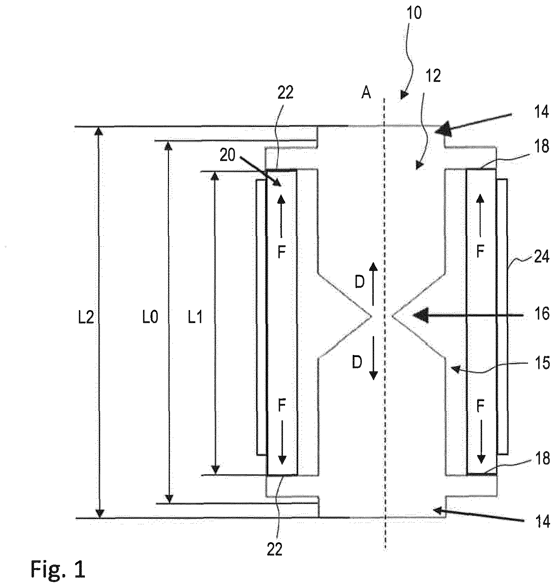

Im Folgenden werden bevorzugte Ausführungsformen der Erfindung anhand der beigefügten Zeichnungen näher erläutert, wobei
- Figur 1: eine Querschnittsansicht einer Verbindungsanordnung gemäß einem Ausführungsbeispiel zeigt.

In Figur 1 ist eine Querschnittsansicht einer Verbindungsanordnung 10 gemäß einem ersten Ausführungsbeispiel gezeigt. Die Verbindungsanordnung 10 umfasst ein Kopplungselement 12, das rotationssymmetrisch um eine Längsachse A ausgebildet ist und einen einstückig ausgebildeten sowie allgemein zylindrischen Grundkörper aufweist, der variierende Querschnittsabmessungen beziehungsweise Durchmesser entlang der Längsachse A aufweist.

An seinen axialen Enden weist das Kopplungselement 12 jeweils einen Kopplungsbereich 14 auf, an dem nicht dargestellte Satellitenkomponenten befestigt sind. In dem gezeigten Beispiel verbindet die Verbindungsanordnung 10 einen Solargenerator mit einem Satelliten-Hauptkörper, wobei die entsprechenden Satellitenkomponenten jeweils an einem der Kopplungsbereiche 14 angeordnet sind.

Die Kopplungsbereiche 14 sind über einen allgemein zylindrischen Verbindungsabschnitt 15 des Kopplungselementes 12 verbunden, der sich geradlinig entlang der Längsachse A erstreckt. Der Verbindungsabschnitt 15 weist ferner eine mittige Einschnürung (Kerbe) 16 auf. Diese bildet einen mechanisch geschwächten Bereich des Kopplungselementes 12, da der entsprechende Querschnittsbereich nur geringe Kräfte übertragen kann und eine gegenüber den weiteren Bereichen des Kopplungselementes 12 minimale Bruchgrenze aufweist. Dies gilt insbesondere für axiale Dehnungen oder Zugkräfte entlang der Längsachse L. Genauer gesagt stellt die Einschnürung 16 den Querschnittsbereich mit dem geringsten Durchmesser des Kopplungselementes 12 dar und bildet somit insgesamt eine Sollbruchstelle des Kopplungselementes 12.
Das Kopplungselement 12 umfasst nahe seinen Kopplungsbereichen 14 ferner jeweils einen vorstehenden Krafteinleitungsbereich 18. Die Krafteinleitungsbereiche 18 bilden jeweils einen Bereich maximalen Durchmessers des Kopplungselementes 12 und liegen einander entlang der Längsachse A betrachtet gegenüber.

Ferner erkennt man in Figur 1, dass die Verbindungsanordnung 10 ein Aktorelement 20 umfasst, das aus einem Formgedächtnismaterial besteht. Das Aktorelement 20 ist ebenfalls rotationssymmetrisch um die Längsachse A ausgebildet und somit allgemein hohlzylindrisch beziehungsweise hülsenförmig. Dabei erstreckt es sich entlang der Längsachse A des Kopplungselementes 12 und nimmt den Verbindungsabschnitt 15 mitsamt der mittigen Einschnürung 16 zentral auf. Mit anderen Worten umgibt das zylindrische Aktorelement 20 den Verbindungsabschnitt 15 entlang dessen gesamter axialen Länge.

In Figur 1 ist ein Ausgangszustand gezeigt, in dem die Verbindungsanordnung 10 nicht gesondert erwärmt wurde. In diesem Zustand steht das Aktorelement 20 mit dessen axialen End- beziehungsweise Stirnwandbereichen 22 in Anlage mit den einander gegenüberliegenden Krafteinleitungsbereichen 18. Folglich bilden die Krafteinleitungsbereiche 18 und insbesondere deren einander gegenüberliegenden Innenflächen Anlageflächen für das Aktorelement 20 an dem Kopplungselement 12, zwischen denen sich das Aktorelement 20 entlang der Längsachse A erstreckt.
Das Aktorelement 20 ist in dem gezeigten Ausgangszustand pseudoplastisch deformiert, wobei die pseudoplastische Deformation eine axiale Kompression entlang der Längsachse A einschließt. Folglich weist das Aktorelement 20 in diesem Zustand eine reduzierte Länge L1 auf.

Tritt der Satellit wieder in die Atmosphäre ein, entsteht bekanntermaßen Reibungswärme, die auch die Verbindungsanordnung 10 erwärmt. Man beachte dass dieser Effekt beim Atmosphärenaustritt nicht oder nur im geringeren Maße auftritt, da der Satellit dabei typischerweise noch innerhalb einer Raumkapsel beziehungsweise einer Raketenspitze angeordnet und somit zumindest teilweise wärmeisoliert ist.

Die entstehende Reibungswärme erwärmt insbesondere das Aktorelement 20. Zusätzlich ist eine elektrische Heizeinheit 24 vorgesehen, die ebenfalls hohlzylindrisch und hülsenförmiger ausgebildet ist und das Aktorelement 20 umgibt sowie unmittelbar an dessen Außenumfangsfläche anliegt. Die elektrische Heizeinheit 24 kann beim Atmosphäreneintritt aktiviert werden oder unabhängig davon, um eine zusätzliche Erwärmung des Aktorelements 20 bereitzustellen.

Erreicht die auf diese Weise erzeugte Erwärmung des Aktorelements 20 einen vorbestimmten Erwärmungsgrad, beginnt das Aktorelement 20 aufgrund seiner Formgedächtniseigenschaften die pseudoplastische Deformation abzubauen und zu seiner ursprünglichen nicht-komprimierten Form zurückzukehren. Dabei dehnt es sich insbesondere entlang der Längsachse A aus, um seine ursprüngliche axiale Länge L0 wieder einzunehmen, die die komprimierte axiale Länge L1 überschreitet.

Das Kopplungselement 12 weist im Vergleich jedoch ein deutlich reduziertes Wärmeausdehnungsverhalten auf, sodass dessen axiale Länge L2 und somit auch der axiale Abstand der Krafteinleitungsbereiche 18 im Wesentlichen konstant bleibt. Dies führt dazu, dass das Aktorelement 20 sich in zunehmenden Maße an den Krafteinleitungsbereichen 18 abstützt, da diese dessen axiale Ausdehnung behindern. Folglich bringt das Aktorelement 20 dort zunehmende Druckkräfte F auf und drängt die Krafteinleitungsbereiche 18 voneinander weg. Hierdurch wird das Kopplungselement 12 und insbesondere dessen Verbindungsabschnitt 15 unter Spannung gesetzt und axial entlang der Längsachse A gedehnt (siehe Pfeile D in Figur 1). Im Ergebnis führt dies dazu, dass die Kopplungsbereiche 14 entlang der Längsachse A voneinander weg bewegt werden und sich die Einschnürung 16 weiter verjüngt. Schließlich wird hierdurch eine Bruchgrenze der Einschnürung 16 überschritten und der Verbindungsabschnitt 15 wird mittig durchtrennt.

Die jeweiligen Hälften des Kopplungselementes 12 (umfassend jemals einen Kopplungsbereiche 14 sowie einen Krafteinleitungsbereich 18) sind somit nicht länger stoffschlüssig miteinander verbunden sondern frei relativ zueinander bewegbar. Da die Krafteinleitungsbereich 18 auch bloß an dem Aktorelement 20 anliegen, sind diese Hälften allgemein losgelöst von den weiteren Komponenten der Verbindungsanordnung 10 bewegbar und eine strukturelle Verbindung der mit den jeweiligen Kopplungsbereiche 14 gekoppelten Satellitenkomponenten wird vollständig zertrennt.

Im gezeigten Fall bedeutet dies, dass die mit einem jeweiligen Kopplungsbereiche 14 verbundenen Satellitenkomponenten in Form eines nicht dargestellten Solargenerators sowie eines Satelliten-Hauptkörpers vollständig voneinander getrennt werden und der Satellit somit gezielt in einzelne kleinere strukturelle Einheiten zerteilt wird. Dies erhöht die Wahrscheinlichkeit, dass die entsprechend kleineren Einheiten beim Atmosphäreneintritt vollständig verglühen und somit kein besonderes Gefährdungspotenzial darstellen, da sie die Erdoberfläche nicht länger erreichen können.

Es versteht sich, dass einzelne Satellitenkomponenten auch über eine Mehrzahl entsprechender Verbindungsanordnungen 10 miteinander verbunden sein können, wobei die Verbindungsanordnungen 10 jeweils in der vorstehend beschriebenen Weise ein wärmeabhängiges Solbruchverhalten aufweisen.

## Patentansprüche

1. Verbindungsanordnung (10) für einen Satelliten mit wärmegesteuertem Sollbruchverhalten,
wobei die Verbindungsanordnung (10) ein Kopplungselement (12) mit einem ersten Kopplungsbereich (14) für eine erste Satellitenkomponente und einem zweiten Kopplungsbereich (14) für eine zweite Satellitenkomponente umfasst,
wobei der erste und zweite Kopplungsbereich (14) über einen Verbindungsabschnitt (15) des Kopplungselements (12) miteinander verbunden sind und der Verbindungsabschnitt (15) einen mechanisch geschwächten Bereich (16) umfasst, der eine Sollbruchstelle bildet,
wobei die Verbindungsanordnung (10) ferner ein Aktorelement (20) umfasst, das dazu ausgebildet ist, sich an dem Kopplungselement (12) abzustützen,
wobei das Aktorelement (20) und das Kopplungselement (12) ein unterschiedliches Wärmeausdehnungsverhalten aufweisen, sodass das Aktorelement (20) dazu ausgebildet ist, ab Erreichen eines vorbestimmten Erwärmungsgrades sich mit einer derartigen Kraft an dem Kopplungselement (12) abzustützen, dass die Sollbruchstelle bricht, wobei das Aktorelement (20) sich beidseitig der Sollbruchstelle (16) an dem Kopplungselement (12) abstützt und einen hohlzylindrischen Abschnitt umfasst, der den Verbindungsabschnitt (15) zumindest abschnittsweise umgibt, **dadurch gekennzeichnet, dass** das Aktorelement (20) die Sollbruchstelle (16) aufnimmt.

2. Verbindungsanordnung (10) nach Anspruch 1,
wobei das Aktorelement (20) dazu ausgebildet ist, nach Maßgabe eines Erwärmungsgrades Druckkräfte auf das Kopplungselement (12) auszuüben.

3. Verbindungsanordnung (10) nach einem der vorangehenden Ansprüche,
wobei das Aktorelement (20) spätestens ab Erreichen des vorbestimmten Erwärmungsgrades wenigstens eine Abmessung (L0) aufweist, die gegenüber einem Zustand des Aktorelements (20) unterhalb des vorbestimmten Erwärmungsgrades vergrößert ist.

4. Verbindungsanordnung (10) nach einem der vorangehenden Ansprüche,
wobei das Aktorelement (20) ein Formgedächtnismaterial umfasst.

5. Verbindungsanordnung (10) nach Anspruch 4,
wobei das Formgedächtnismaterial pseudoplastisch deformiert ist und spätestens ab Erreichen des vorbestimmten Erwärmungsgrades beginnt, zu seiner ursprünglichen Form zurückzukehren.

6. Verbindungsanordnung (10) nach Anspruch 5,
wobei die pseudoplastische Deformation ein Komprimieren das Aktorelements (20) umfasst.

7. Verbindungsanordnung (10) nach einem der vorangehenden Ansprüche,
wobei das Kopplungselement (12) wenigstens zwei Krafteinleitungsbereiche (18) umfasst und das Aktorelement (20) zwischen diesen Krafteinleitungsbereichen (18) angeordnet ist.

8. Verbindungsanordnung (10) nach einem der vorangehenden Ansprüche, ferner umfassend eine Heizeinheit (24), um das Aktorelement (20) zu erwärmen.

9. Satellit,
umfassend eine Verbindungsanordnung (10) nach einem der Ansprüche 1-8.

10. Verfahren zur Strukturtrennung eines Satelliten,
wobei der Satellit eine Verbindungsanordnung (10) aufweist, die ein Kopplungselement (12) mit einem ersten Kopplungsbereich (14) für eine erste Satellitenkomponente und einem zweiten Kopplungsbereich (14) für eine zweite Satellitenkomponente umfasst, wobei der erste und zweite Kopplungsbereich (14) über einen Verbindungsabschnitt (15) des Kopplungselements (12) miteinander verbunden sind und der Verbindungsabschnitt (15) einen mechanisch geschwächten Bereich (16) umfasst, der eine Sollbruchstelle bildet,
wobei die Verbindungsanordnung (10) ferner ein Aktorelement (20) umfasst, das dazu ausgebildet ist, sich an dem Kopplungselement (12) abstützen;
wobei das Aktorelement (20) und das Kopplungselement (12) ein unterschiedliches Wärmeausdehnungsverhalten aufweisen, sodass das Aktorelement (20) dazu ausgebildet ist, ab Erreichen eines vorbestimmten Erwärmungsgrades sich mit einer derartigen Kraft an dem Kopplungselement (12) abzustützen, dass die Sollbruchstelle bricht,
umfassend den folgenden Schritt:
- Vorgeben einer Flugbahn des Satelliten, so dass dieser sich bei einem Atmosphärenwiedereintritt derart erwärmt, dass das Aktorelement (20) bis zu dem vorbestimmten Erwärmungsgrad erwärmt wird.

## Claims

1. Connection arrangement (10) for a satellite with thermally controlled predetermined breaking behaviour,
wherein the connection arrangement (10) comprises a coupling element (12) having a first coupling region (14) for a first satellite component and a second coupling region (14) for a second satellite component,
wherein the first and the second coupling region (14) are connected to each other via a connection section (15) of the coupling element (12) and the connection section (15) comprises a mechanically weakened region (16) which forms a predetermined breaking point,
wherein the connection arrangement (10) further comprises an actuator element (20) adapted support itself on the coupling element (12),
wherein the actuator element (20) and the coupling element (12) have different thermal expansion characteristics, so that the actuator element (20), after reaching a predetermined degree of heating, is adapted to support itself on the coupling element (12) with such a force that the predetermined breaking point breaks, wherein the actuator element (20) supports itself on the coupling element (12) on both sides of the predetermined breaking point (16) and comprises a hollow cylindrical section which surrounds the connection section (15) at least in sections, **characterized in that** the actuator element (20) accommodates the predetermined breaking point (16).

2. Connection arrangement (10) according to claim 1,
wherein the actuator element (20) is adapted to exert compressive forces on the coupling element (12) according to a degree of heating.

3. Connection arrangement (10) according to one of the preceding claims,
wherein the actuator element (20), at the latest when the predetermined degree of heating is reached, has at least one dimension (L0), which is enlarged compared to a state of the actuator element (20) below the predetermined degree of heating.

4. Connection arrangement (10) according to one of the preceding claims,
wherein the actuator element (20) comprises a shape memory material.

5. Connection arrangement (10) according to claim 4,
wherein the shape memory material is pseudoplastically deformed and begins to return to its original shape at the latest when the predetermined degree of heating is reached.

6. Connection arrangement (10) according to claim 5,
wherein the pseudoplastic deformation comprises compressing the actuator element (20).

7. Connection arrangement (10) according to one of the preceding claims,
wherein the coupling element (12) comprises at least two force introduction regions (18) and the actuator element (20) is arranged between these force introduction regions (18).

8. Connection arrangement (10) according to one of the preceding claims, further comprising a heating unit (24) for heating the actuator element (20).

9. Satellite
comprising a connection arrangement (10) according to any one of claims 1-8.

10. Method for structural separation of a satellite,
wherein the satellite comprises a connection arrangement (10) comprising a coupling element (12) having a first coupling region (14) for a first satellite component and a second coupling region (14) for a second satellite component, wherein the first and the second coupling region (14) are connected to each other via a connection section (15) of the coupling element (12) and the connection section (15) comprises a mechanically weakened region (16) which forms a predetermined breaking point, wherein the connection arrangement (10) further comprises an actuator element (20) which is adapted to support itself on the coupling element (12);
wherein the actuator element (20) and the coupling element (12) have a different thermal expansion behavior, so that the actuator element (20), after reaching a predetermined degree of heating, is adapted to support itself on the coupling element (12) with such a force that the predetermined breaking point breaks, comprising the following step:
- predetermining a trajectory of the satellite so that it heats up during atmospheric re-entry in such a way that the actuator element (20) is heated to the predetermined degree of heating.

## Revendications

1. Agencement de liaison (10) pour un satellite ayant un comportement de rupture à commande thermique,
dans lequel l'agencement de liaison (10) comprend un élément d'accouplement (12) comportant une première zone d'accouplement (14) pour un premier composant de satellite et une deuxième zone d'accouplement (14) pour un deuxième composant de satellite,
dans lequel les première et deuxième zones d'accouplement (14) sont reliées l'une à l'autre par une partie de liaison (15) de l'élément d'accouplement (12) et la partie de liaison (15) comprend une zone mécaniquement affaiblie (16) qui forme un point destiné à la rupture,
dans lequel l'agencement de liaison (10) comprend en outre un élément d'actionnement (20) qui est conçu pour s'appuyer sur l'élément d'accouplement (12),
dans lequel l'élément d'actionnement (20) et l'élément d'accouplement (12) présentent un comportement de dilatation thermique différent, de sorte que l'élément d'actionnement (20) est conçu, lorsqu'il atteint un degré d'échauffement prédéterminé, pour s'appuyer sur l'élément d'accouplement (12) avec une force telle que le point destiné à la rupture se rompt,
dans lequel l'élément d'actionnement (20) s'appuie sur l'élément d'accouplement (12) des deux côtés du point destiné à la rupture (16) et comprend une partie cylindrique creuse qui entoure la partie de liaison (15) au moins sur certaines parties,
**caractérisé en ce que** l'élément d'actionnement (20) reçoit le point destiné à la rupture (16).

2. Agencement de liaison (10) selon la revendication 1,
dans lequel l'élément d'actionnement (20) est conçu pour exercer des forces de pression sur l'élément d'accouplement (12) en fonction d'un degré d'échauffement.

3. Agencement de liaison (10) selon l'une des revendications précédentes,
dans lequel l'élément d'actionnement (20) présente, au plus tard lorsqu'il atteint le degré d'échauffement prédéterminé, au moins une dimension (L0) qui est augmentée par rapport à un état de l'élément d'actionnement (20) en dessous du degré d'échauffement prédéterminé.

4. Agencement de liaison (10) selon l'une des revendications précédentes,
dans lequel l'élément d'actionnement (20) comprend un matériau à mémoire de forme.

5. Agencement de liaison (10) selon la revendication 4,
dans lequel le matériau à mémoire de forme est déformé de manière pseudoplastique et commence à reprendre sa forme initiale au plus tard lorsqu'il atteint le degré d'échauffement prédéterminé.

6. Agencement de liaison (10) selon la revendication 5,
dans lequel la déformation pseudoplastique comprend une compression de l'élément d'actionnement (20).

7. Agencement de liaison (10) selon l'une des revendications précédentes,
dans lequel l'élément d'accouplement (12) comprend au moins deux zones d'introduction de force (18) et l'élément d'actionnement (20) est disposé entre ces zones d'introduction de force (18).

8. Agencement de liaison (10) selon l'une des revendications précédentes,
comprenant en outre une unité de chauffage (24) pour chauffer l'élément d'actionnement (20).

9. Satellite comprenant un agencement de liaison (10) selon l'une des revendications 1 à 8.

10. Procédé de séparation structurale d'un satellite,
dans lequel le satellite présente un agencement de liaison (10) qui comprend un élément d'accouplement (12) comportant une première zone d'accouplement (14) pour un premier composant de satellite et une deuxième zone d'accouplement (14) pour un deuxième composant de satellite,
dans lequel les première et deuxième zones d'accouplement (14) sont reliées l'une à l'autre par une partie de liaison (15) de l'élément d'accouplement (12) et la partie de liaison (15) comprend une zone mécaniquement affaiblie (16) qui forme un point destiné à la rupture,
dans lequel l'agencement de liaison (10) comprend en outre un élément d'actionnement (20) qui est conçu pour s'appuyer sur l'élément d'accouplement (12) ;
dans lequel l'élément d'actionnement (20) et l'élément d'accouplement (12) présentent un comportement de dilatation thermique différent, de sorte que l'élément d'actionnement (20) est conçu, lorsqu'il atteint un degré d'échauffement prédéterminé, pour s'appuyer sur l'élément d'accouplement (12) avec une force telle que le point destiné à la rupture se rompt,
comprenant l'étape consistant à :
- prévoir une trajectoire du satellite de manière à ce qu'il s'échauffe lors d'une rentrée dans l'atmosphère de telle sorte que l'élément d'actionnement (20) soit chauffé au degré d'échauffement prédéterminé.
